# DEMANDE DE BREVET EUROPEEN

(11) **EP 2 339 511 A1**
(43) Date de publication de la demande: **29.06.2011**
(21) Numéro de dépôt: 09306247.9
(22) Date de dépôt: 17.12.2009
(51) Int. Cl.: G06K 19/077, G06K 19/073, G06K 1/12

(54) **Objet communicant avec sécurisation d'une interface de communication par contact**

(71) Demandeur: Gemalto SA, 92190 Meudon (FR)
(72) Inventeur: Lesur, Jean-Luc, 92197 Meudon Cedex (FR)
(74) Mandataire: Cour, Pierre

(57) **Abrégé**

L'invention permet de sécuriser l'appairage entre un corps d'objet et un module électronique lié à cet objet. Le motif ajouté est réalisé de sorte qu'au moins une ligne est dessinée à cheval entre au moins un contact et le corps de l'objet. Le marquage ainsi réalisé permet de réaliser une paire unique. Il est alors impossible de remplacer un module sur une autre carte sans avoir un témoin visuel de la fraude ainsi réalisée.

## Description

L'invention se rapporte à un objet communicant avec sécurisation d'une interface de communication par contact.

Parmi les objets communicants, il existe des objets sécurisés tel que par exemple les cartes à puce. Les cartes à puce disposent d'un corps de carte sur lequel est placé un module incluant des contacts affleurant. Le module comporte en outre une puce reliée aux contacts affleurant afin de pouvoir effectuer des transactions de type sécurisée.

Aujourd'hui, les cartes à puce se généralisent dans les cartes bancaires et les documents d'identité. Le facteur de forme carte est parfois remplacé par un autre tel que par exemple dans les passeports ou encore dans les clefs USB. L'avantage de l'utilisation d'une puce permet d'associer à un objet des informations confidentielles. Suivant le niveau de sécurisation requis, l'accès aux informations peut être restreint ou pas, suivant que l'on décide d'utiliser l'authentification de l'objet ou l'authentification de l'objet associé à un secret détenu uniquement par son utilisateur.

Dans le cas où l'authentification est propre à l'objet, celui-ci se comporte comme une simple clef qui délivre des informations à un lecteur pour valider que l'objet est authentique. Certaines cartes bancaires se comportent en simple clef et communique au lecteur uniquement les accès aux compte bancaire à un serveur par l'intermédiaire d'une liaison sécurisée par la carte. Il existe aussi d'autres applications telles que les cartes santés où aucun code d'accès n'est à fournir par l'utilisateur. En cas de perte ou de vol, il est possible de bloquer les cartes à distance ou de les neutraliser afin qu'elles ne soient plus utilisables.

L'absence de code utilisateur pose cependant le problème de rendre la puce accessible pour tout utilisateur même frauduleux. Il a été repéré des fraudes consistant à enlever le module d'une carte lors d'une transaction et à remplacer celui par un faux module qui se limite uniquement aux plages de contact. L'utilisateur courant range sa carte sans remarquer que son module a été enlevé et s'aperçoit que sa carte ne fonctionne pas lors de la prochaine transaction qu'il effectue sans nécessairement prendre les mêmes mesures qu'en cas de perte ou de vol. Les modules ainsi volés sont donc utilisables avec d'autres cartes jusqu'à ce que l'on s'aperçoive de la fraude réalisé.

L'invention remédie au problème précité par l'ajout d'un motif ajouté après la mise en place dans le corps de l'objet communicant. Le motif ajouté est réalisé de sorte qu'au moins une ligne est dessinée à cheval entre au moins un contact et le corps de l'objet. Le marquage ainsi réalisé permet de réaliser une paire unique. Il est alors impossible de remplacer un module sur un autre objet sans avoir un témoin visuel de la fraude ainsi réalisée.

Plus particulièrement l'invention est un objet communicant disposant d'un corps d'objet qui comporte une cavité pour recevoir un module électronique disposant de contacts affleurant situé dans le même plan qu'une surface du corps d'objet. Un motif est imprimé sur le corps d'objet après l'insertion du module dans ledit corps. Ledit motif comporte au moins un trait qui soit imprimé à cheval entre ledit corps et au moins un contact du module.

Préférentiellement, le motif peut être imprimé par laser sur le corps de l'objet et sur les contacts du module. L'objet peut être une carte à puce. La carte à puce peut être une carte bancaire, une carte d'identité, une carte santé ou un permis de conduire. Le motif peut correspondre à une inscription de personnalisation faite de manière unique.

Selon un autre aspect, l'invention est un procédé de fabrication d'un objet communicant dans lequel on réalise les étapes de réalisation d'une cavité dans un corps d'objet, de placement et collage d'un module électronique dans la cavité, et d'impression. L'étape de placement et collage d'un module électronique dans la cavité est réalisée de sorte qu'une plage de contact du module électronique soit affleurant à la surface du corps d'objet. L'étape d'impression est réalisée après l'étape de placement et le collage du module électronique afin d'imprimer à la fois le corps d'objet et au moins une plage de contact du module.

Préférentiellement, l'impression peut se faire par laser. Le corps d'objet peut être imprimé et recouvert d'une couche de protection de l'impression avant que la cavité soit réalisée dans le corps d'objet. L'étape d'impression peut se faire pendant une étape de personnalisation de la carte au cours de laquelle la carte reçoit des informations et des marquages d'information réalisé de manière unique. L'étape d'impression peut permettre d'imprimer une information unique à cheval sur le corps de l'objet et sur une plage de contact.

L'invention sera mieux comprise, et d'autres particularités et avantages apparaîtront à la lecture de la description qui va suivre, la description faisant référence aux dessins annexés, parmi lesquels :
les figures 1a et 1b illustrent un usinage de corps de carte à puce,
la figure 2 illustre les défauts de positionnement d'un module inséré dans un corps de carte,
les figures 3a, 3b, 3c et 3d illustrent différents mode de réalisation de l'invention.

Comme connu de l'homme du métier, un procédé classique de réalisation de carte à puce consiste à imprimer des feuilles de PVC correspondant à plusieurs cartes à puce. On recouvre ensuite les impressions effectuées par de très fines feuilles de protection (connues sous le nom d'overlay). Les feuilles sont ensuite découpées au format carte, par exemple par poinçonnage. Puis les cartes sont usinées afin d'y réaliser des cavités destinées à recevoir les modules électroniques.

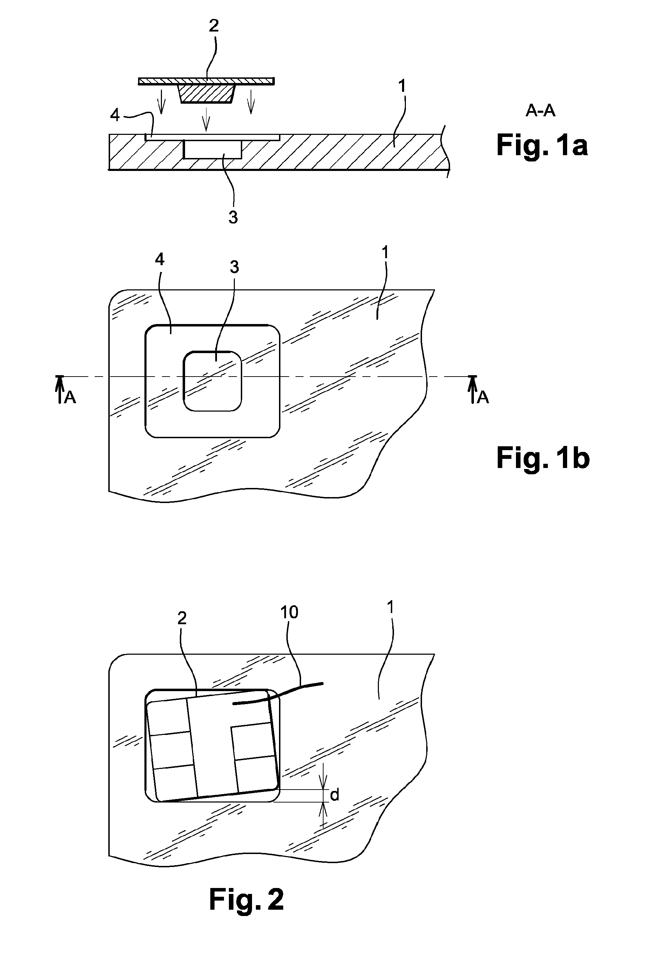

Les figures 1a et 1 b représentent une vue partiel d'un corps 1 de carte à puce avant le collage du module 2. La figure 1a montre en outre la carte en vue de coupe selon l'axe A-A indiqué sur la figure 1b. La cavité 3 est classiquement réalisée par un fraisage qui définie un chanfrein 4 qui la surplombe et qui sert au collage du module 2. Pour diminuer les temps de production il est connu d'utiliser plusieurs machines en parallèles. L'utilisation de plusieurs machines permet de réaliser des cavités identiques à une erreur de tolérance près. Cette erreur est de l'ordre de quelques centaines de µm et peut varier entre deux cartes issues de deux machines différentes.

En outre, lors de la réalisation du module, des erreurs de tolérance du même ordre de grandeur sont réalisées. A titre d'exemple, les modules sont couramment fabriqués sur des bandes qui comportent deux modules côte à côte qui sont découpés de la bande 4 par 4 par poinçonnage. Là aussi intervient une erreur de tolérance du même ordre de grandeur que pour la cavité. Les dimensions de la cavité 3 et du chanfrein 4 sont légèrement plus grandes que la dimension du module afin que celui-ci puisse y être déposé sans résistance, il s'en suit un jeu de positionnement.

La figure 2 illustre le positionnement d'une module 2 dans un corps de carte 1 en exagérant considérable la taille de l'erreur. Toutefois, on peut s'apercevoir que le positionnement 2 du module peut entrainer des décalages d entre le bord de la cavité 1 et le bord du module 2. Cette erreur de positionnement correspond à l'addition des différentes tolérances et du jeu indiqué plus haut et peut être de l'ordre de quelque dixième de millimètre.

Ainsi, un trait 10 imprimé après le positionnement à cheval entre une des plages de contacts du module 2 et le corps de carte 1 correspond à une signature entre le corps de carte 1 et le module 2. L'erreur de positionnement correspond à une erreur aléatoire qu'il est très difficile de reproduire facilement. Ainsi, l'échange de modules entre deux cartes devient plus facilement visible. De même le remplacement d'un module par un faux module devient beaucoup plus compliquer car il faudra imprimer sur le module le même motif que celui qui est sur le module d'origine et faire en sorte que les motifs coïncident entre la carte et le faux module. L'opération devient alors très complexe pour ne plus être décelable.

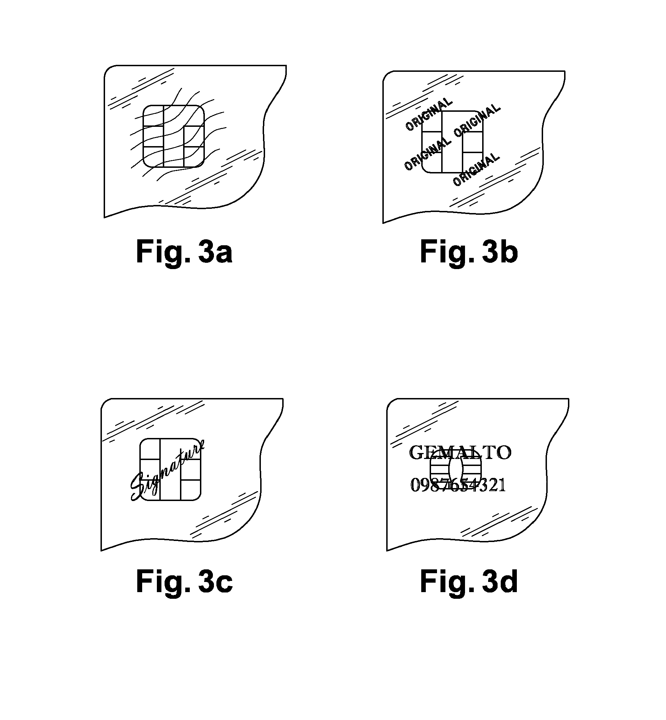

A titre d'exemple, différent types de motifs peuvent être utilisé. La figure 3a montre l'utilisation de lignes guillochées débordant de part et d'autre du module 2. Il est aussi possible d'imprimer un texte comme montré sur la figure 3b. De plus, l'impression de sécurisation du module peut se faire lors de la personnalisation de la carte, il est alors possible d'utiliser la signature du porteur de la carte comme motif de sécurisation du module.

Afin de réaliser l'impression, plusieurs possibilités sont offertes. Selon un premier mode de réalisation on réalise le motif à l'aide d'une imprimante à jet d'encre. Cependant ce type d'impression n'est pas suffisant pour assurer une bonne tenue dans le temps sans être obliger de rajouter une couche de protection et donc une étape de laminage en plus pour coller la couche de protection.

Une méthode préférée consiste à utiliser un marquage par laser UV utilisant une longueur d'onde de 355 µm et une puissance de quelques watts. Ce type de laser permet de marquer le corps de carte à travers la couche de protection sans endommager celle-ci. L'utilisation de ce type de laser permet d'altérer le revêtement d'or des plages de contact du module sans l'endommager. Cela revient à marquer le motif dans la couche d'or en utilisant les mêmes paramètres de marquage que ceux utilisés pour le plastique. Le laser permet en outre de garder une bonne conductivité au niveau du marquage sur les contacts par rapport à une impression par jet d'encre. Un autre avantage du laser UV, c'est qu'il est couramment utilisé pour faire la personnalisation graphique des corps de carte par effet photonique en altérant les particules de TlO₂ généralement utilisée pour améliorer la blancheur du support. Le rajout de ce sceaux de sécurité sur le module se fait durant la phase de personnalisation de la carte par l'ajout d'un motif supplémentaire.

L'ajout du sceau de sécurité peut également être personnalisé carte par carte afin d'être unique. La figure 3c montre un exemple de sceau unique réalisé par numérisation et impression de la signature du porteur de carte. Plus simplement, il est possible d'utiliser comme sceau un numéro de série comme montré sur la figure 3d.

Comme indiqué au début de ce document, l'invention concerne tout objet communicant ayant des caractéristiques communes avec une carte à puce pour pouvoir mettre en oeuvre l'invention. A titre indicatif, il suffit que l'objet dispose d'un corps d'objet pour recevoir un module électronique qui dispose d'au moins un contact affleurant à la surface dudit corps d'objet. Les contraintes de fabrication étant sensiblement les mêmes, il est alors possible de sécurisé l'ensemble selon l'invention en utilisant une impression à cheval entre le corps d'objet et le contact affleurant.

## Revendications

1. Objet communicant disposant d'un corps d'objet (1) qui comporte une cavité (3) pour recevoir un module électronique (2) disposant de contacts affleurant situé dans le même plan qu'une surface du corps d'objet (1), **caractérisé en ce que** un motif (10) est imprimé sur le corps (1) d'objet après l'insertion du module (2) dans ledit corps, et dans lequel ledit motif (10) comporte au moins un trait qui soit imprimé a cheval entre ledit corps (1) et au moins un contact du module (2).

2. Objet communicant selon la revendication 1, dans lequel le motif est imprimé par laser sur le corps de l'objet (1) et sur les contacts du module (2).

3. Objet communicant selon la revendication 1 dans lequel l'objet est une carte à puce.

4. Objet communicant selon la revendication 3, dans lequel la carte à puce est une carte bancaire, une carte d'identité, une carte santé ou un permis de conduire.

5. Objet communicant selon la revendication 1, dans lequel le motif correspond à une inscription de personnalisation faite de manière unique.

6. Procédé de fabrication d'un objet communicant dans lequel on réalise les étapes suivantes :
- réalisation d'une cavité (3) dans un corps d'objet (1),
- placement et collage d'un module électronique (2) dans la cavité de sorte que une plage de contact du module électronique (2) soit affleurant à la surface du corps d'objet (1),
**caractérisé en ce qu'**après le placement et le collage du module électronique (2), on réalise une étape d'impression pour imprimer à la fois le corps d'objet (1) et au moins une plage de contact du module (2).

7. Procédé selon la revendication 6, dans lequel l'impression se fait par laser.

8. Procédé selon la revendication 6, dans lequel le corps d'objet est imprimé et recouvert d'une couche de protection de l'impression avant que la cavité soit réalisée dans le corps d'objet.

9. Procédé selon la revendication 6, dans lequel l'étape d'impression se fait pendant une étape de personnalisation de la carte au cours de laquelle la carte reçoit des informations et des marquages d'information réalisé de manière unique.

10. Procédé selon la revendication 9, dans lequel l'étape d'impression permet d'imprimer une information unique à cheval sur le corps de l'objet et sur une plage de contact.
